# EUROPEAN PATENT APPLICATION

(11) **EP 4 455 610 A2**
(43) Date of publication of application: **30.10.2024**
(21) Application number: 24172005.1
(22) Date of filing: 23.04.2024
(51) Int. Cl.: G01C 21/16, G01C 25/00, G08G 5/00

(54) **SAFETY CRITICAL ATTITUDE SOLUTIONS VIA MONITORING AND VERIFICATION OF ANGULAR RATE SENSORS**

(30) Priority: 25.04.2023 US 202318139076
(71) Applicant: Rockwell Collins, Inc., Cedar Rapids, IA 52498 (US)
(72) Inventor: LONDAL, Cody A., Herndon, VA (US); GAVRILETS, Vladislav, McLean, VA, 22101 (US)
(74) Representative: Dehns

(57) **Abstract**

A system and method for monitoring and verification of digital gyroscopic sensors determines a primary angular velocity vector via a primary digital gyroscopic sensor triad and two or more backup angular velocity vectors via backup analog gyroscopic sensor triads. Based on additional aiding parameters, the aircraft attitude and heading reference system (AHRS) determines a primary attitude solution based on the primary angular velocity vector and one or more backup attitude solutions based on the backup angular velocity vectors. If no other faults are present with respect to the primary and backup gyroscopic sensor triads (e.g., the primary and backup triads are otherwise consistent in their measurements), and the primary attitude solution sufficiently deviates from the backup attitude solutions, the AHRS detects a solution fault in the primary gyroscopic sensor triad.

## Description

### GOVERNMENT SUPPORT

This technology was developed with United States government support under contract number W911QY1800246 awarded by the United States Army. The United States government has certain rights in this invention.

### BACKGROUND

Software-based solutions must follow a rigorous development and verification process in order to be certified for safety-critical applications, e.g., aircraft-based navigation and positioning systems where the risk of presenting hazardously misleading information (HMI) is present. For example, certified analog gyroscopic sensors (e.g., angular rate sensors) may be replaceable by commercial off the shelf (COTS) digital sensors, which provide high performance and accuracy at a comparatively low cost. However, these next-generation digital sensors require software components to enable their performance and accuracy within sufficient integrity bounds for safety-critical certification, and the process of providing the requisite design assurance artifacts for certification is both difficult and expensive.

### SUMMARY

In a first aspect, an aircraft-based attitude and heading reference system (AHRS) is disclosed. In embodiments, the AHRS includes a primary digital gyroscopic sensor triad for determining a primary angular velocity vector of the aircraft. The AHRS further includes at least two certified backup analog gyroscopic sensor triads, each capable of determining a backup angular velocity vector. The AHRS receives aiding parameters from aircraft-based sensors and, based on the aiding parameters, determines a primary attitude solution (e.g., based on the primary angular velocity vector) and at least one secondary or backup attitude solution (e.g., based on the two or more backup angular velocity vectors). The AHRS includes an output voter for comparing the primary and backup attitude solutions, and when the primary attitude solution sufficiently deviates from the backup attitude solution/s (provided no other faults are detected with respect to the primary and backup gyroscopic sensor triads) a solution fault is declared with respect to the primary gyroscopic sensor triad.

In some embodiments, the AHRS declares a backup miscompare fault if the two or more backup angular velocity vectors deviate from each other.

In some embodiments, the AHRS declares a primary miscompare fault if the primary angular velocity vector sufficiently deviates from the backup angular velocity vectors.

In some embodiments, the backup attitude solution is based on an average of two or more backup angular velocity vectors.

In some embodiments, a first backup attitude solution is based on a first backup angular velocity vector, and a second backup attitude solution is based on a second backup angular velocity vector, and the solution fault is declared if the primary attitude solution deviates from one or both backup attitude solutions.

In some embodiments, the AHRS declares an output fault of the primary digital gyroscopic sensor triad if its data output (e.g., the primary angular velocity vector) is stale, corrupted, or missing.

In some embodiments, the AHRS declares an output fault of a backup gyroscopic sensor triad if its data output (e.g., the associated backup angular velocity vector) is stale, corrupted, or missing.

In some embodiments, the aiding parameters include a true airspeed of the aircraft, an altitude of the aircraft, or a linear acceleration of the aircraft.

In a further aspect, an aircraft-based method for monitoring and verifying angular rate sensors is disclosed. In embodiments, the method includes determining a primary angular velocity vector of an aircraft via an aircraft-based primary digital gyroscopic sensor triad. The method includes determining two or more backup angular velocity vectors of the aircraft via backup analog gyroscopic sensor triads (e.g., two or more triads or sets). The method includes receiving aiding parameters from aircraft-based air data/acceleration sensors. The method includes determining a primary attitude solution based on the aiding parameters and the primary angular velocity vector. The method includes determining at least one backup attitude solution based on the aiding parameters and the backup angular velocity vectors. The method includes declaring a solution fault of the primary digital gyroscopic sensor triad if the primary attitude solution sufficiently deviates from at least one backup attitude solution.

In some embodiments, the backup attitude solutions include a first attitude solution based on the first backup angular velocity vector and a second attitude solution based on the second backup angular velocity vector.

In some embodiments, a single backup attitude solution is based on an average of the first and second backup angular velocity vectors.

In a still further aspect, an aircraft-based method for monitoring and verifying angular rate sensor sets is disclosed. In embodiments, the method includes determining a primary angular velocity vector of an aircraft via an aircraft-based primary digital gyroscopic sensor triad. The method includes determining two or more backup angular velocity vectors of the aircraft via backup analog gyroscopic sensor triads. The method includes declaring either 1) a primary miscompare fault of the primary digital gyroscopic sensor triad, if the primary angular velocity vector sufficiently deviates from one or more of the backup angular velocity vectors; or 2) a backup miscompare fault of the one or more backup gyroscopic sensor triads, if the backup angular velocity vectors sufficiently deviate from each other.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block diagram illustrating an attitude heading and reference system (AHRS) configured for monitoring and verification of angular rate sensor sets according to example embodiments of this disclosure;
FIG. 2 is a block diagram illustrating variant monitoring and verification operations of the AHRS of FIG. 1; and
FIG. 3 and 4 are flow diagrams illustrating a method for monitoring and verification of angular rate sensor sets according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to systems and methods for providing rigorous but cost-effective monitoring and fault detection with respect to high performance primary digital angular rate sensor sets (e.g., sensor triads, triaxial sensors) via similarly cost-effective backup analog angular rate sensor triads or sets as backup units, allowing the use of commercial off the shelf (COTS) digital angular rate sensor sets in safety-critical applications. For example, aircraft-based AHRS may incorporate non-certified but high-performance COTS three-axis digital gyroscopic sensor triads to provide attitude solutions (e.g., aircraft orientation relative to its x/y/z or pitch/roll/yaw rotational axes) at safety-critical levels of accuracy without resorting to the cumbersome and expensive process of generating the design assurance artifacts necessary for formal certification.

Further, monitoring and fault detection according to the inventive concepts disclosed herein is designed to detect both "fast" and "slow" failure modes with respect to the gyroscopic sensor sets and their underlying software. For example, rate voting with respect to direct outputs of the primary (digital) and backup (analog) sensor triads may detect sudden larger-scale bias errors, while output voting with respect to attitude solutions incorporating the primary and analog sensor triads may detect less perceptible drifting in the primary sensor triads before the drift becomes significant enough to provide a risk of returning hazardously misleading information (HMI).

Embodiments of the inventive concepts disclosed herein may be applicable to aircraft-based attitude and heading reference systems (AHRS) where attitude (e.g., orientation) and/or position/navigation/time (PNT) solutions of safety-critical integrity are required. In some embodiments, monitoring and fault detection of digital angular rate sensor triads or sets may be applicable to head tracking systems, e.g., wherein rapid high-integrity determination of a position and orientation ("pose") of a pilot's head relative to an aircraft cockpit, and of the aircraft relative to a navigation or earth-centered reference frame, may be required.

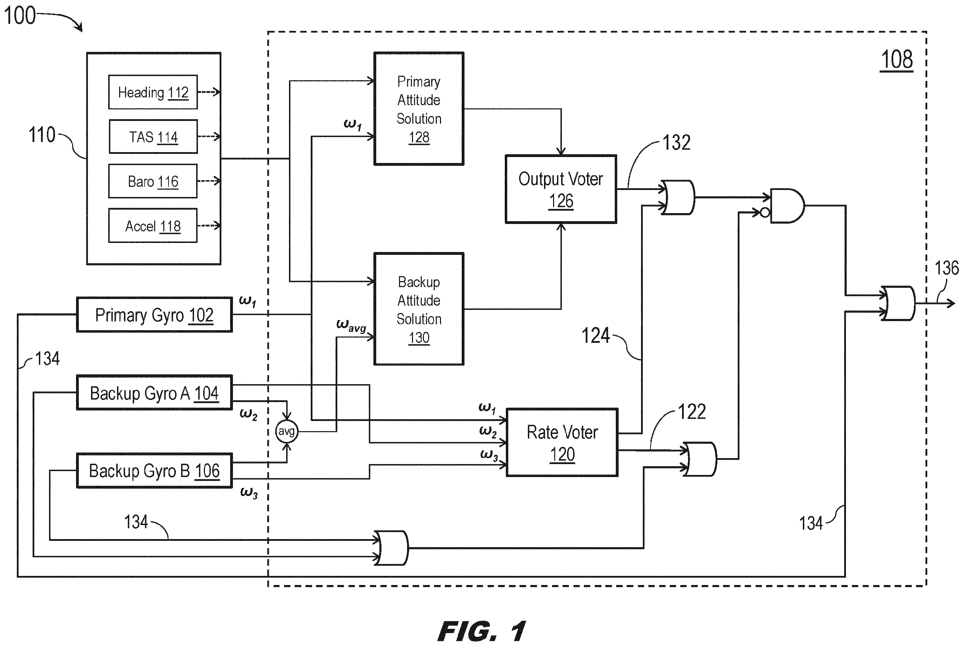

Referring now to FIG. 1, an aircraft-based AHRS system 100 is disclosed. The AHRS 100 may include primary gyroscopic sensor set 102, backup gyroscopic sensor sets 104, 106, and processors 108.

In embodiments, the AHRS 100 may provide safety-critical attitude solutions based on parameters received from other aircraft-based sensors 110 and angular rate measurements ***ω*** determined by the primary and backup gyroscopic sensor sets 102, 104, 106. For example, the primary gyroscopic sensor set 102 may be a non-certified digital three-axis angular rate sensor or sensor triad, e.g., implemented as a silicon micromechanical system (MEMS), and configured to determine a primary angular velocity vector (e.g., angular rate triad, angular velocity measurement set), e.g., a set of three orthogonal angular rate measurements ***ω₁***, relative to three rotational axes (e.g., x/y/z, pitch/roll/yaw). Further, the backup gyroscopic sensor sets 104, 106 may be analog three-axis angular rate sensors or sensor triads configured to respectively determine a backup aircraft angular velocity vector ***ω₂***, ***ω₃***, also relative to the three rotational axes. In embodiments, the backup gyroscopic sensor sets 104, 106 may not be as accurate or precise as the primary gyroscopic sensor set 102; however, the backup gyroscopic sensor sets may be similarly cost-effective, reliable, and capable of providing sufficiently accurate angular rate measurements to serve as a reference for monitoring of the primary gyroscopic sensor sets.

In embodiments, the AHRS 100 may be communicatively coupled to, and may receive aiding parameters from, additional aircraft-based aiding sensors 110. For example, aiding sensors 110, and/or aiding parameters received therefrom, may include aircraft heading sensors 112, true airspeed (TAS) sensors 114, barometric altimeter 116, and/or accelerometer 118 (e.g., linear acceleration).

In embodiments, the AHRS 100 may identify or detect angular rate faults (e.g., primary rate faults) associated with the primary gyroscopic sensor set 102 based on comparisons and votes with respect to the and the angular rate measurements ***ω₂***, ***ω₃*** received from the backup gyroscopic sensor sets 104, 106. For example, the AHRS 100 may include a rate voter 120 (e.g., executing on the processors 108 of the AHRS). In embodiments, the rate voter 120 may detect "fast" failure modes of the primary gyroscopic sensor set 102 via direct comparison of the raw angular rate measurements ***ω₁*** received therefrom and the raw angular rate measurements ***ω₂***, ***ω₃*** received from the backup gyroscopic sensor sets 104, 106. For example, when the angular rate measurements ***ω₂***, ***ω₃*** received from the backup gyroscopic sensor sets 104, 106 are substantially in agreement (e.g., within a threshold level) but the angular rate measurements ***ω₁*** deviate from measurements ***ω₂***, ***ω₃*** beyond a threshold level, the AHRS 100 may indicate and/or report a primary miscompare 122 indicative of a likely angular rate fault of the primary gyroscopic sensor set 102. If, however, the raw angular rate measurements ***ω₂***, ***ω₃*** sufficiently disagree (e.g., beyond a threshold level), the AHRS 100 may indicate/report a backup miscompare 124, e.g., whereby at least one of the backup gyroscopic sensor sets 104, 106 is in a likely failure state.

In embodiments, the AHRS 100 may include an output voter 126. For example, the output voter 126 may identify and detect (e.g., when "fast" faults are not detected by the rate voter 120) slower, longer-term drift errors with respect to the primary gyroscopic sensor set 102 by comparing primary and backup attitude solutions 128, 130 (e.g., limited aided solutions (LAS)). In embodiments, each attitude solution 128, 130 may comprise a high integrity estimate of flight critical aircraft states, e.g., based on an AHRS function (e.g., which estimates aircraft attitude and heading) and a vertical channel (e.g., which estimates baroinertial altitude and vertical speed), taking as input the aiding parameters provided by the aiding sensors 110 and angular rate measurements ***ω***. For example, the output voter 126 may compare a primary attitude solution 128 and a backup attitude solution 130, where the primary attitude solution 128 is based on the aiding parameters and the angular rate measurements ***ω₁*** received from the primary gyroscopic sensor set 102 and the backup attitude solution 130 is based on the aiding parameters and a moving average ***ω_{avg}*** of the angular rate measurements ***ω₂***, ***ω₃*** received from the backup gyroscopic sensor sets 104, 106 (provided a backup miscompare 124 is not detected). Further, the primary and backup attitude solutions 128, 130 may substantially differ only in their respective incorporation of angular rate measurements ***ω₁*** and ***ω_{avg}***.

In embodiments, the output voter 126 may compare each individual component (e.g., pitch angle, roll angle, altitude, climb rate) of the primary and backup attitude solutions 128, 130 with respect to individualized thresholds and persistence to quantify any deviation of the primary attitude solution from the backup attitude solution. For example, if (as noted above) the backup gyroscopic sensor sets 104, 106 sufficiently agree that a backup miscompare 124 is not detected, and the primary attitude solution 128 deviates from the backup attitude solution 130 to at least a threshold level, the output voter 126 may declare and/or report a solution fault 132 (e.g., output miscompare) indicative of an angular rate fault of the primary gyroscopic sensor set 102. In embodiments, the output voter 126 may set any relevant comparison thresholds so as to prevent false alarms, e.g., associated with inherent but non-faulty levels of drift with respect to the primary gyroscopic sensor set 102.

In embodiments, the AHRS 100 may declare and/or report output error faults 134 associated with the primary or backup gyroscopic sensor sets 102, 104, 106. For example, if one or more of the angular rate measurements ***ω₁***, ***ω₂***, ***ω₃*** respectively received from the primary gyroscopic sensor set 102 and the backup gyroscopic sensor sets 104, 106 is associated with stale data, corrupt data, or missing data, an output error fault may be declared with respect to the associated gyroscopic sensor set.

In embodiments, the AHRS 100 may return the primary attitude solution 128 if no solution fault or other associated fault is detected as noted above. If, for example, a fault or failure mode 136 is detected, the AHRS 100 may declare or report the source of the fault, e.g., a primary miscompare 122 or backup miscompare 124 indicated by the rate voter 120; a solution fault 132 (e.g., output miscompare) indicated by the output voter 126; or an output error fault 134 associated with one or more specific gyroscopic sensor sets.

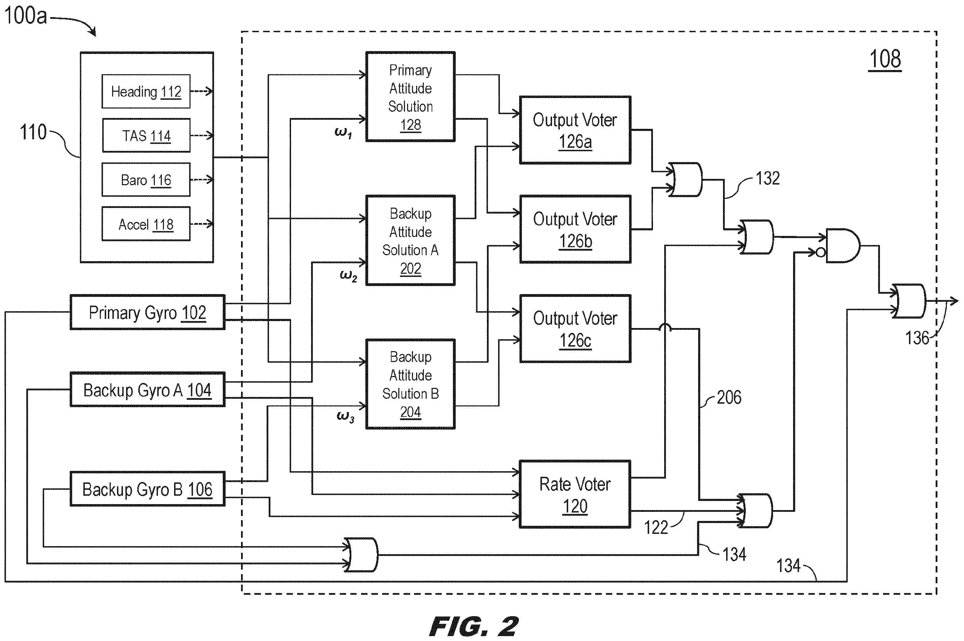

Referring now to FIG. 2, the AHRS 100a may be implemented and may function similarly to the AHRS 100 of FIG. 1, except that the AHRS 100a may monitor and verify the primary gyroscopic sensor set 102 and its output on the basis of three attitude solutions 128, 202, 204 (e.g., one primary, two backup) and three output voters 126a-126c.

In embodiments, the AHRS 100a may generate, in addition to the primary attitude solution 128, backup attitude solutions 202, 204. For example, the backup attitude solution 202 may be based on the aiding parameters received from the aircraft-based aiding sensors 110 and the angular rate measurements ***ω₂*** received from the backup gyroscopic sensor set 104. Similarly, the backup attitude solution 204 may be based on the aiding parameters received from the aircraft-based aiding sensors 110 and the angular rate measurements ***ω₃*** received from the backup gyroscopic sensor set 106.

In embodiments, the output voter 126a may compare the individual components of the primary attitude solution 128 and the backup attitude solution 202, the output voter 126b may compare individual components of the primary attitude solution 128 and the backup attitude solution 204, and the output voter 126c may compare individual components of the two backup attitude solutions 202 and 204. If, for example, the backup attitude solutions 202, 204 sufficiently deviate from each other, the output voter 126c may declare a backup miscompare 206. In embodiments, if the output voter 126c indicates the backup attitude solutions 202, 204 as substantially in agreement, but the output voters 126a, 126b indicate that the primary attitude solution 128 sufficiently deviates from either or both of the backup attitude solutions, an output miscompare 132 may be declared and/or reported. For example, either the backup miscompare 206 or the output miscompare 132 may be indicative of a solution fault in the primary gyroscopic sensor set 102.

In embodiments, similarly to the AHRS 100 of FIG. 1, the AHRS 100a may return the primary attitude solution 128 if no solution fault or other associated fault 136 is detected. If, for example, a fault or failure mode 136 is detected, the AHRS 100a may declare or report either the fault 136 or report more precisely the source of the fault, e.g., a primary miscompare 122 or backup miscompare 124 indicated by the rate voter 120; a solution fault 132 (e.g., output miscompare) indicated by the output voters 126a, 126b; a backup miscompare 206 indicated by the output voter 126c; or an output error fault 134 associated with one or more specific gyroscopic sensor sets.

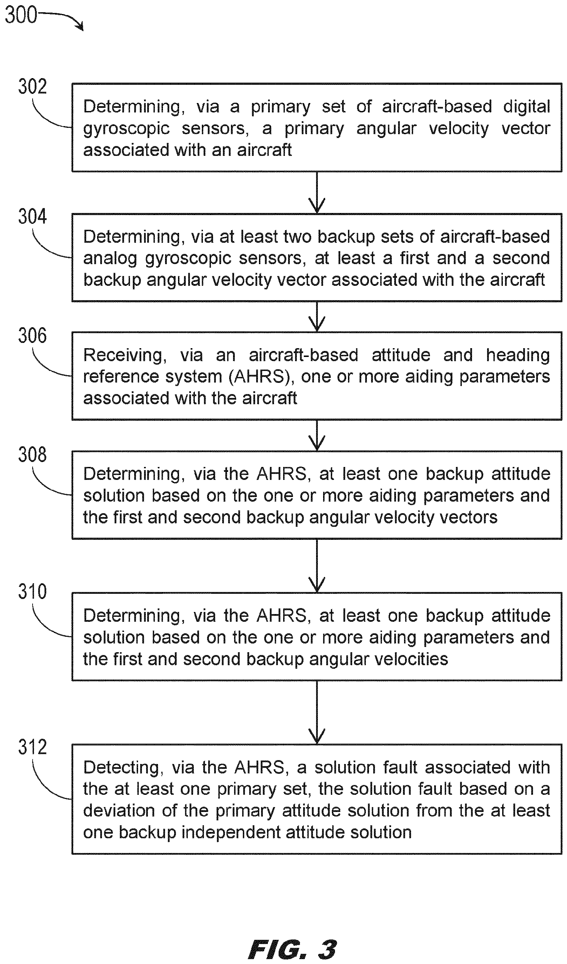

Referring now to FIG. 3, the method 300 may be implemented by the AHRS 100, 100a and may include the following steps.

At a step 302, an aircraft-based primary gyroscopic sensor set (e.g., digital three-axis angular rate sensor, sensor triad) determines primary angular velocity measurements associated with a rotational motion of the aircraft.

At a step 304, at least two backup gyroscopic sensor sets (e.g., analog three-axis angular rate sensors, sensor triad) independently determine backup angular velocity measurements associated with the rotational motion.

At a step 306, the AHRS receives aiding parameters from aircraft-based aiding sensors. For example, the aiding parameters may include a true airspeed (TAS), barometric altitude, and/or linear acceleration readings.

At a step 308, the AHRS determines a primary attitude solution based on the sensed aiding parameters and the primary angular velocity measurements received from the primary gyroscopic sensor set.

At a step 310, the AHRS determines at least one backup attitude solution based on the sensed aiding parameters and the backup angular velocity measurements. For example, a first backup attitude solution may incorporate backup angular velocity measurements from a first backup gyroscopic sensor set, and a second backup attitude solution may incorporate backup angular velocity measurements from a second, different backup gyroscopic sensor set. In some embodiments, a backup attitude solution may be based on an average of the first and second backup angular velocity measurements.

At a step 312, an output voter of the AHRS detects a solution fault of the primary gyroscopic sensor set based on a comparison of the primary attitude solution and the backup attitude solutions. For example, the AHRS may compare individual components (e.g., pitch angle, roll angle, altitude, climb rate) of the primary attitude solution with like components of a backup attitude solution based on an average of backup angular velocity measurements. If the individual components of the primary and backup attitude solutions sufficiently deviate (e.g., relative to individually defined thresholds), the solution fault is detected. In some embodiments, multiple output voters compare the components of the primary attitude solution to those of each backup attitude solution, and the components of each backup attitude solution. If, for example, the components of each backup attitude solution sufficiently agree but the components of the primary attitude solution deviate sufficiently from those of one or more backup attitude solutions, the solution fault is detected.

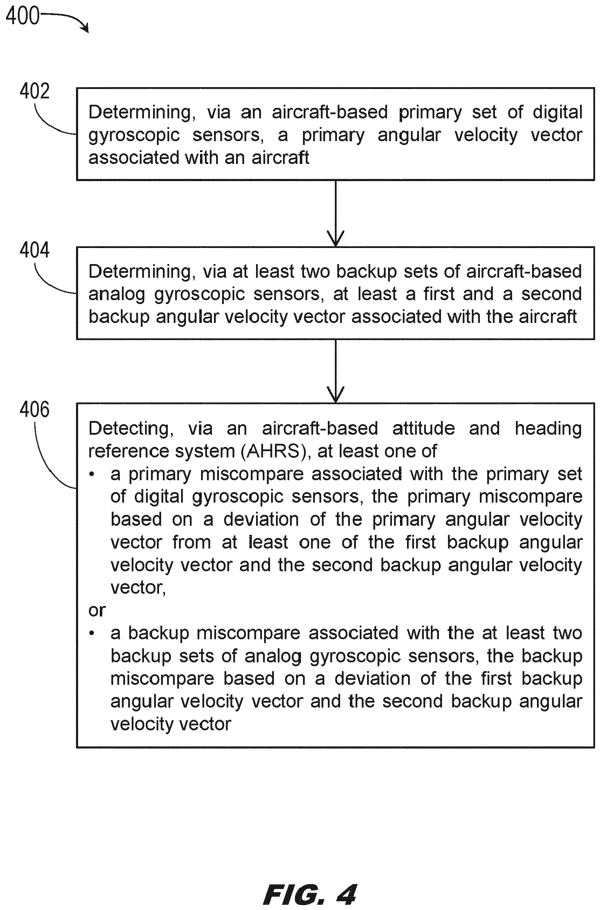

Referring now to FIG. 4, the method 400 may be implemented by the AHRS 100, 100a and may include the following steps.

At a step 402, an aircraft-based primary gyroscopic sensor set (e.g., digital three-axis angular rate sensor, sensor triad) determines primary angular velocity measurements associated with a rotational motion of the aircraft.

At a step 404, at least two backup gyroscopic sensor sets (e.g., analog three-axis angular rate sensors, sensor triad) independently determine backup angular velocity measurements associated with the rotational motion.

At a step 406, a rate voter of the AHRS compares the primary angular velocity measurements received from the primary digital gyroscopic sensor set to the backup angular velocity measurements to determine if miscompare faults are present. For example, the rate voter declares a primary miscompare if the primary angular velocity measurement sufficiently deviates from either backup angular velocity measurement. Alternatively, or additionally, the rate voter declares a backup miscompare if the backup angular velocity measurements do not sufficiently agree.

Embodiments of the inventive concepts disclosed herein may reduce overall system costs while preserving safety critical performance by allowing lower-cost, high-performance commercial off the shelf (COTS) digital and/or software-based sensors to be used and monitored by lower-performing but certified analog components.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An attitude and heading reference system (AHRS), comprising:
at least one primary set of digital gyroscopic sensors configured to determine a primary angular velocity vector;
at least two backup sets of analog gyroscopic sensors, each backup set configured to determine a backup angular velocity vector;
and
one or more processors (108) communicatively coupled to the at least one primary set and the at least two backup sets, the one or more processors (108) configured to:
receive one or more aiding parameters from at least one aircraft-based sensor;
determine a primary attitude solution associated with at least one flight critical aircraft parameter, the primary attitude solution based on the one or more aiding parameters and the primary angular velocity vector;
determine at least one backup attitude solution associated with the at least one flight critical aircraft parameter, the at least one backup attitude solution based on the one or more aiding parameters and the at least two backup angular velocity vectors;
and
detect a solution fault associated with the at least one primary set based on a deviation of the primary attitude solution from the at least one backup attitude solution.

2. The attitude and heading reference system of Claim 1, wherein the one or more processors (108) are configured to detect a backup miscompare based on a deviation between the at least two backup angular velocity vectors.

3. The attitude and heading reference system of any preceding Claim, wherein the one or more processors (108) are configured to detect at least one primary miscompare based on a deviation of the primary angular velocity vector from at least one of the at least two backup angular velocity vectors.

4. The attitude and heading reference system of any preceding Claim, wherein the at least one backup attitude solution is based on an average of the at least two backup angular velocity vectors.

5. The attitude and heading reference system of any preceding Claim, wherein the at least one backup attitude solution includes at least:
a first backup attitude solution based on the one or more aiding parameters and the first backup angular velocity vector;
and
a second backup attitude solution based on the one or more aiding parameters and the second backup angular velocity vector;
and wherein the one or more processors (108) are configured to detect the solution fault based on a deviation of the primary attitude solution from at least one of the first or second backup attitude solutions.

6. The attitude and heading reference system of any preceding Claim, wherein the one or more processors (108) are configured to detect an output fault associated with the at least one primary set, the output fault based on at least one of:
a stale primary angular velocity vector;
a corrupt primary angular velocity vector;
or
a missing primary angular velocity vector.

7. The attitude and heading reference system of any preceding Claim, wherein the one or more processors (108) are configured to detect an output fault associated with the at least two backup sets, the output fault based on at least one of:
a stale backup angular velocity vector;
a corrupt backup angular velocity vector;
or
a missing backup angular velocity vector.

8. The attitude and heading reference system of any preceding Claim, wherein the one or more aiding parameters include at least one of:
an airspeed of the aircraft;
an altitude of the aircraft;
or
an acceleration of the aircraft.

9. The attitude and heading reference system of any preceding Claim, wherein:
the at least one primary set of digital gyroscopic sensors includes at least one digital gyroscopic sensor triad.

10. The attitude and heading reference system of any preceding Claim, wherein:
the at least two backup sets of analog gyroscopic sensors include at least one analog gyroscopic sensor triad.

11. A method for monitoring and verification of angular rate sensors, the method comprising:
determining, via a primary set of aircraft-based digital gyroscopic sensors, a primary angular velocity vector associated with an aircraft;
determining, via at least two backup sets of aircraft-based analog gyroscopic sensors, at least a first and a second backup angular velocity vector associated with the aircraft;
receiving, via an aircraft-based attitude and heading reference system (AHRS), one or more aiding parameters associated with the aircraft;
determining, via the AHRS, a primary attitude solution based on the one or more aiding parameters and the primary angular velocity vector;
determining, via the AHRS, at least one backup attitude solution based on the one or more aiding parameters and the first and second backup angular velocity vectors;
and
detecting, via the AHRS, a solution fault associated with the at least one primary set, the solution fault based on a deviation of the primary attitude solution from the at least one backup attitude solution.

12. The method of Claim 11, wherein detecting a solution fault associated with the at least one primary set includes:
detecting the solution fault based on a deviation of the primary attitude solution from at least one of the first or the second backup attitude solutions.

13. The method of Claim 11, wherein detecting a solution fault associated with the at least one primary set includes:
detecting the solution fault based on a deviation of the primary attitude solution from a backup attitude solution based on an average of the first and second backup angular velocity vectors.

14. A method for monitoring and verification of angular rate sensors, the method comprising:
determining, via an aircraft-based primary set of digital gyroscopic sensors, a primary angular velocity vector associated with an aircraft;
determining, via at least two backup sets of aircraft-based analog gyroscopic sensors, at least a first and a second backup angular velocity vector associated with the aircraft;
and
detecting, via an aircraft-based attitude and heading reference system (AHRS), at least one of:
a primary miscompare associated with the primary set of digital gyroscopic sensors, the primary miscompare based on a deviation of the primary angular velocity vector from at least one of the first backup angular velocity vector and the second backup angular velocity vector;
or
a backup miscompare associated with the at least two backup sets of analog gyroscopic sensors, the backup miscompare based on a deviation of the first backup angular velocity vector and the second backup angular velocity vector.
